# EUROPEAN PATENT SPECIFICATION

(11) **EP 1 020 820 B1**
(45) Date of publication and mention of the grant of the patent: **13.10.2004**
(21) Application number: 97946768.5
(22) Date of filing: 11.12.1997
(51) Int. Cl.: G07F 7/08, G07F 7/10

(54) **PORTABLE DEVICE FOR REMOTE FINANCIAL TRANSACTIONS WITH MICROPROCESSOR CARD**
TRAGBARE VORRICHTUNG FÜR FINANZIELLE FERNÜBERWEISUNGEN MIT MIKROPROZESSKARTE
DISPOSITIF PORTABLE POUR TRANSACTIONS MONETAIRES A DISTANCE AVEC CARTE A MICROPROCESSEUR

(30) Priority: 09.07.1997 ES 9701880 U; 21.11.1997 ES 9703046 U
(43) Date of publication of application: 19.07.2000
(73) Proprietor: Ben-Mizzian, Maria Cruz, 08130 Santa Perpetua de Mogoda (ES); Piana, Pietro Paolo, 08130 Santa Perpetua de Mogoda (ES)
(72) Inventor: PIANA, Pietro, Paolo, E-08130 Santa Perpetua de Mogoda (ES)
(74) Representative: Dendorfer, Claus, Dr.
(86) International application number: PCT/ES1997/000302
(87) International publication number: WO 1999/003073

(56) References cited:
- EP-A- 0 793 206
- WO-A-92/21110
- WO-A-95/20195
- FR-A- 2 696 032
- GB-A- 2 308 001

## Description

### BACKGROUND OF THE INVENTION

### Field of the invention

This invention pertains to the sector of production of devices for microprocessor cards electronic reading-recording.

More concretely, the invention refers to a device which may receive an inserted card provided with a microprocessor and to be able to manage it, which is prepared for said purpose to communicate with a remote central unit, specially devised to perform remote financial transactions such as to reload or to add up a certain amount to a given balance of a card designed to perform transactions in general of small amounts as a means for paying small daily expenses (shops, newspaper stands, tobacco shops, bars, taxi cabs or other transportation means, etc. equipped with a terminal for "electronic collection") substituting so the use of fractional money. Anyway, the device allows to manage payment cards without limit of the amount which may be stored, with prior authorization by related banking institution, in the microprocessor card.

### State of the art

The microprocessor cards with erasable memory, such as an EEPROM, usually known as chip-card, and namely those specially devised to be used as financial transaction support are well-known, such as disclosed among other in documents EP-A-0378454 and EP-A-0423035, whose cards allow to directly perform payment transactions either in common money or in telephone units. Said cards have a built-in integrated circuit which comprises a microprocessor and one or more associated memories built in a plastic card having standardized sizes and provided with an also standardized connector which allows by means of an electric connection to establish wished links with a central unit capable of receiving messages and to establish a dialogue with the card making possible for example to validate a payment or to establish a telephone talk. In such a card the microprocessor of dedicated purpose and its memories play an obvious part of safety (as said memories house authorization, control, balance updated values, etc. codes), said microprocessor being able to manage a complex algorithm of calculation or for checking a secret code from identification data stated to it. After introducing this microprocessor card in a reader, if the secret code calculated is not equivalent to a secret code already contained in the card, this later remains nonoperative.

At the present time the use of cards for financial transactions provided with a microprocessor and a recordable memory mainly as paying means for daily small expenses is widespread replacing the use of fractional money. The process used is as follows: The user receives a card from a banking institution, said card incorporating a microprocessor and at least one associated memory which may store data and be coupled through a suitable interface to a reading-recording means, said card being associated to an account open at said institution in the name of said user, said cards being known as "purse card". Initially the banking institution transfers, by electronic means, a certain amount of money from said account to the card and which is stored in the memory. The user uses the card as a paying means in shops which have available a reading-recording device for said cards with an interface to the microprocessor of the card itself which transfers the amount to be paid from the card to shopkeeper's account, due debit being recorded in said card. When the initial amount loaded in the card is exhausted or is insufficient, the user newly addresses himself to the banking institution which electronically transfers again or loads a new amount of money from the user's specific account to the card, a new cycle starting.

This process has the advantage of making it is not longer necessary to use fractional money thus saving space and weight this means and making possible to pay the exact amount without the need to adjust it with loose change.

Although it has said advantages, this process shows with regard to the user, the drawback of having to personally go to the bank office or to the automatic cashier thereof or of a banking group each time he needs to reload said card depending in addition on the working hours of said office and on the location of its automatic cashiers.

WO 95/20195 discloses a funds transaction device having the features of the preamble of claim 1. The device is adapted for reading a read-only card that serves for identifying an account that is to be used in the transaction. A transaction comprises the transfer from the user's bank account or credit or debit card to the owner/leasee's bank account or vice versa.

GB 2 308 001 A discloses a payment card with a memory in which a balance of electronic money is stored.

### Description of the invention

The invention overcomes above drawbacks relative to card reloading, extending in addition and extraordinarily facilitating the range of possible operations by creating a portable device devised for remote management of microprocessor cards or chip-cards financial transaction, said cards being connectable via modem (modulator-demodulator for transforming microprocessor output signals to a suitable format for their transmission by telephone route) to related bank office at any time and from any place where there is a telephone line available, allowing the user to perform himself the operation of reloading said card, making unnecessary his personal appearance at said office or his access to an automatic cashier.

In the state of the art portable devices are also known for the functional link of a microprocessor card for managing payments to a central unit, as disclosed in the document EP-A-670556, which discloses several connecting means to a remote unit, disclosing for it radioelectrical connections, by ultrasounds, by vocal sound waves and by infrared and detecting means to decide which of said connecting means is accessible in a certain situation and in function of signals received from a remote central unit.

Unlike above background, the portable device proposed herein is based on the possibility of a single and simple connection of the device to the telephone network by using a conventional connecting tap or base, a keyboard and means having been provided for a quick and easy access to the remote central unit for reloading a number of monetary units in the card from a minimum residual value, or, alternatively, for adding up a given value (in the event the user needs at a given time to purchase something whose value exceeds the typical referred amounts, for the use of the card) and for subtracting a given amount leaving the amount loaded in the card limited to a wished value.

A portable device according to one preferred embodiment comprises means for electronic reading-recording microprocessor cards memory of mentioned type, a modem for computer communication through the telephone line, a standard security access module such as a SAM module (which will intervene in every operation with data flow), a digital keyboard , a function keyboard (to simplify and facilitate the use of the device), a display such as a for example 12x2 LCD screen and an output which includes a female connector or a short standardized cable for telephone line, such as a length of telephone cable provided with a standard male connector at its free end for connecting said device to the telephone line by simply inserting said male connector in related standard base. The device also integrates disposable feed batteries.

Suitable programs have been also provided associated to said means (for example an integrated circuit) for reading-recording the memory or memories associated to said card microprocessor which allow to logically implement the different functions among which we can point out reading the card memory, showing the residual value thereof at the display, computer connection with related banking institution for reloading the chip-card from any place where there is a telephone line available, confirming said operation through the display, recording in memory the banking institution telephone number with the possibility to dial in it with a single keying in and the possibility to introduce a customized secret access code.

The device is made of a generally small-sized closed casing although desk models can be constructed (with same technical specifications and essentially integrating same components) which possesses on one of its faces a keyboard and a display and which has available on one of its other faces a slot for introducing the card, an accessible housing for the disposable feed batteries, and a recess to store a length of telephone cable ending with the connecting male connector when said cable is not being used.

The invention is defined by the appended claims. For a better understanding of the characteristics of the invention disclosed, these are detailed below with the assistance of a sheet of drawings in which the following has been illustrated:

### Short description of the drawings

Fig. 1 is a perspective view of a first example of embodiment of the invention.
Fig. 2 shows, also in perspective, a part view illustrating the part of the casing including the device autonomous feed batteries.
Fig. 3 is a part view, in perspective, illustrating a second example of embodiment of the invention.

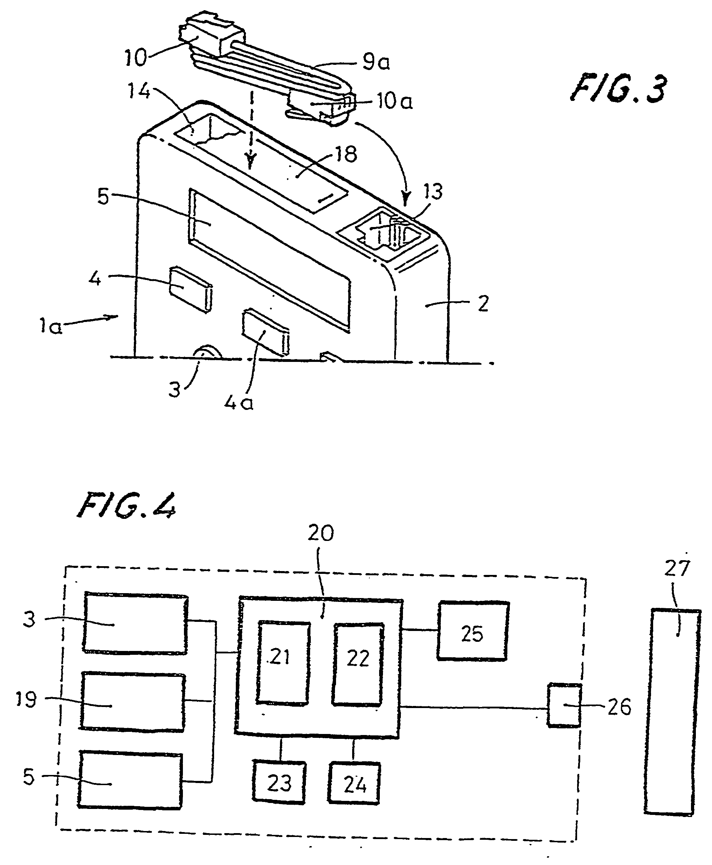

Last, Fig. 4 shows a block diagram explaining the device essential components for a best understanding of its operation and performances.

### Detailed description of the examples of embodiment

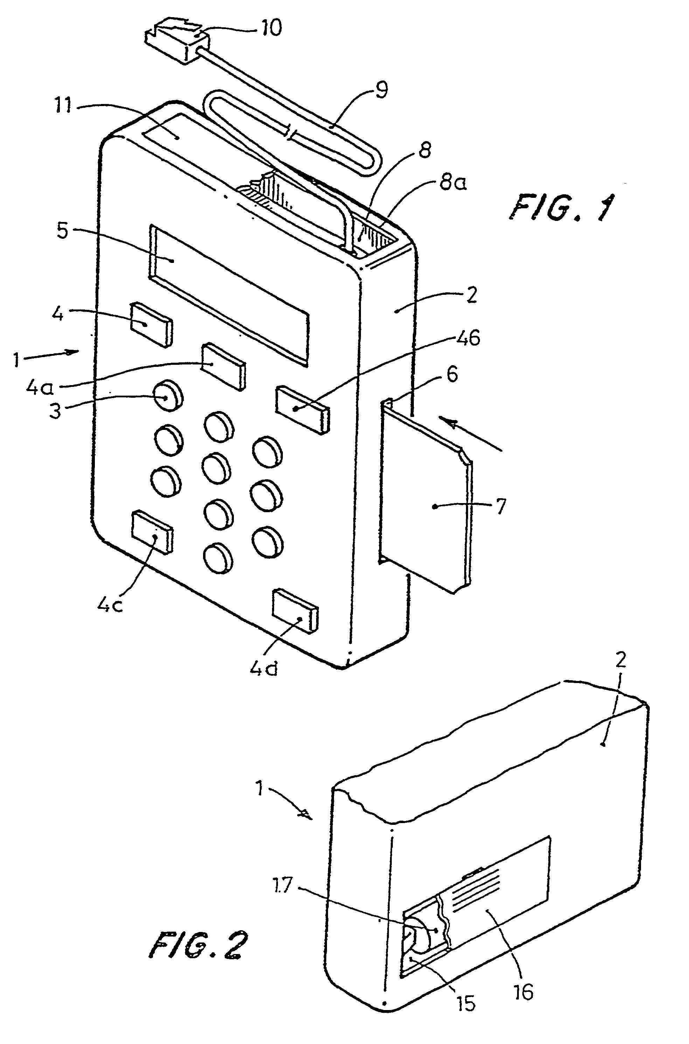

In Fig. 1 a device 1 according to the invention can be seen, in which there is a casing 2 on whose front face a digital keyboard 3, a display constituted by for example a 2x12 LCD screen 5 and keys 4 - 4d are arranged which have allocated following functions:
- 4/F1:: reading card residual value;
- 4a/F2:: operation options, basically loading (adding up from a minimum residual value or zero, or from a given amount) or unloading (subtracting up to a wished value), as a response to messages displayed on the screen;
- 4b/F3:: confirming the operation;
- 4c/F4:: starting/disconnecting; and
- 4d/F5:: establishing a direct and customized line with the banking institution or remote host.

Preferably on one of its sides (if the device is small-sized) the casing 2 possesses a slot 6 for introducing a card 7, provided with a microprocessor, particularly dedicated or specialized for banking transactions, said slot 6 providing access to a reading-recording device built in said casing. On one of its smaller faces the casing possesses an opening 8a of a recess 8 from whose bottom starts a telephone cable 9 (a short length such as 1 m is sufficient) ended by a male telephone connector 10 which extends a bidirectional access path to a modem. The recess 8 integrates a cover 11 so that when the device is not being used the set of cable 9 and terminal 10 is stored in said recess 8 which is closed with the cover 11. By means of said cable 9, the portable device 1 functional connection with a standard telephone connection base can be achieved.

Said key 4d has been provided to facilitate the device operation and for said purpose its keying in releases an automatic customized connection sequence (from the device user) to the bank office avoiding that the telephone number have to be dialled and a control password is sent, a task which is performed by a program.

As stated and as illustrated in Fig. 1, in addition a key 4c, specific for cancelling any operation, has been provided which may act at any time of the management with the device.

Fig. 2 shows a part view, in perspective, of the back part of the casing 2 of a device 1 according to the invention, an accessible housing 15 can be seen provided with a cover 16 for disposable batteries 17 for feeding (for example 1.5 or 3 volts) the set circuitry.

Fig. 3 illustrates a device similar to the one above disclosed, therefore identical numerals have been used to refer to equivalent parts, with the difference that, in this case, the connecting element or member is a short cable 9a such as a length of telephone cable provided with a standard male connector 10, 10a at each of its ends for connecting said device to the telephone line through a related standard base. The device has for such purpose a female connector 13 which ends a bidirectional access path to a modem, one of said male connectors 10 or 10a of cable 9a will be connected to said connector 13, and its has also available a recess 14 to store cable 9a when it is not being used, provided with related cover 18.

Obviously in the model designed for desk which is not shown, recess 8 or 14 may be at another place of the casing so that its access is easier.

Now referring to the block diagram of Fig. 4, in said figure it can be noted that the device comprises a reader-recorder 19 for microprocessor cards 7, a keyboard 3 and a screen 5 associated to a set 20 of two associated integrated circuits which essentially comprise a dedicated microprocessor or control unit 21 and a modem 22. Associated to said set 20 there is an external RAM memory 23 acting as buffer or intermediate memory, extendable, having sufficient capacity for transfer operations and data management and an external ROM memory 24 where are located the main programs and subprogams for managing the device and system and which allow referred loading (adding), unloading (subtracting) operations, direct connection, security code control, etc., supporting multiple communication protocols. A SAM 25 security access module has been provided also associated to set 20 through which all the device data flows circulate. Numeral 26 shows the communication bidirectional access path extended by connecting cable 9 (Fig. 1) or ending at female base 13 (Fig. 3), and 27 shows the remote central unit or host (such as a bank office) with which said connection is established. More concretely, said ROM 24 memory houses management programs, essentially adding up or subtracting amounts input by keyboard 3 to a given value and several communication protocols, specially comprising a routine to establish a direct customized telephone connection from the user to the remote bank office 27, said routine being activated by acting on one of said 4d keys having functions allocated to them.

By means of an exemplary solution the user may consider he is holding to a certain extent the "bank in his pocket" as it allows to dispose by means of his customized reloadable microprocessor card of money amounts sufficiently significant to provide for his daily requirements without the need to compulsorily go to the bank office or to an automatic cashier.

The invention essentially disclosed and in an exemplary embodiment may be varied in its details (for example different arrangements for mounting the example cover: slide, hinged, etc.) which do not alter its object which is concreted in following claims.

## Claims

1. Device for remote financial transactions with a user's card, said device being of the type which includes a microprocessor (21), a modem (22) to establish a telephone connection with a remote unit (27), and interface means for card reading operations, said device comprising a casing (2) provided on one of its faces with a digital keyboard (3) and a display (5) such as a LCD screen and including a slot (6) for introducing cards (7) and a bidirectional access path (26) to said modem (22),
**characterized in that**
- said user's card is a microprocessor card;
- said interface means also serves for card recording operations;
- said casing is further provided with keys (4, 4a, 4b, 4c, 4d) having functions allocated to them;
- said device is pocket portable;
- said device is adapted for performing a remote financial transaction in which an amount of money is loaded onto said microprocessor card, said amount of money being stored in a memory of said microprocessor card; and
- said device further comprises:
- a flexible member (9, 9a), such as a telephone cable, provided with at least one male connector (10) at its free end, adapted to establish a connection of said access path (26) to a telephone standard connecting base;
- a recess (8, 14) of a size enabling to house said connecting flexible member (9, 9a) for its storage and eventual transportation when it is not being used;
- a removable cover (11, 18) to temporarily close said recess (8, 14).

2. Device, according to claim 1, **characterized in that** said bidirectional access path (26) to said modem (22) is ended in an output female connector (13) and **in that** said connecting member (9a) such as a telephone cable comprises a short length and is provided with a male connector (10, 10a) at each of its ends, adapted to connect the device to a telephone standard connecting base.

3. Device, according to claim 1, **characterized in that** said bidirectional access path (26) to said modem (22) is extended by said connecting flexible member (9), such as a telephone member which includes a short length.

4. Device according to claim 1, **characterized in that** said microprocessor (21) and modem (22) are constituted as a set (20) of two integrated circuits, which have associated external memories, a first one RAM (23) acting as intermediate memory supporting management tasks and data processing and a second one ROM (24) which houses management programs, essentially adding or subtracting amounts input through the keyboard to a given value and several communication protocols, comprising a routine to establish a customized direct telephone connection from the user to the remote bank office (27) said routine being activated by keying in one (4d) of said keys having functions allocated to them.

5. Device according to claim 4, **characterized in that** another specific key of those having functions allocated to them, is applied to canceling any operation the device performs and **in that** it is prepared to act at any step of the process or management, stopping them.

6. Device according to claim 5, **characterized in that** the integration of a security access module has been provided such as a SAM (25) module through which all the set data flows circulate.

## Patentansprüche

1. Vorrichtung für finanzbezogene Ferntransaktionen mit einer Benutzerkarte, wobei die Vorrichtung einen Mikroprozessor (21), ein Modem (22) zum Aufbau einer Telefonverbindung mit einer Ferneinheit (27) und eine Schnittstelleneinrichtung für Kartenlesevorgänge aufweist, und wobei die Vorrichtung ein Gehäuse (2) aufweist, das auf einer seiner Seiten mit einer digitalen Tastatur (3) und einer Anzeige (5), wie zum Beispiel einem LCD-Bildschirm, ausgestattet ist und einen Schlitz (6) zum Einschieben von Karten (7) und einen bidirektionalen Zugriffspfad (26) auf das Modem (22) aufweist,
**dadurch gekennzeichnet, daß**
- die Benutzerkarte eine Mikroprozessorkarte ist;
- die Schnittstelleneinrichtung auch für Kartenschreibvorgänge dient;
- das Gehäuse ferner mit Tasten (4, 4a, 4b, 4c, 4d) ausgestattet ist, denen Funktionen zugeordnet sind;
- die Vorrichtung in der Tasche tragbar ist;
- die Vorrichtung dazu ausgestaltet ist, eine finanzbezogene Ferntransaktion durchzuführen, bei der ein Geldbetrag in die Mikroprozessorkarte geladen wird, wobei der Geldbetrag in einem Speicher der Mikroprozessorkarte gespeichert wird; und
- die Vorrichtung ferner aufweist:
- ein flexibles Teil (9, 9a), wie zum Beispiel ein Telefonkabel, das an seinem freien Ende mit mindestens einem männlichen Verbinder (10) ausgestattet ist und das dazu eingerichtet ist, eine Verbindung des Zugriffspfades (26) mit einer üblichen Telefonanschlußbasis herzustellen;
- eine Vertiefung (8, 14) mit einer Größe, die es ermöglicht, das flexible Verbindungsteil (9, 9a) zur Lagerung und gegebenenfalls zum Transport, wenn es nicht benutzt wird, aufzunehmen;
- eine abnehmbare Abdeckung (11, 18), um die Vertiefung (8, 14) zeitweise zu verschließen.

2. Vorrichtung gemäß Anspruch 1, **dadurch gekennzeichnet, daß** der bidirektionale Zugriffspfad (26) auf das Modem (22) in einem weiblichen Ausgangsverbinder (13) endet, und daß das Verbindungsteil (9a), wie zum Beispiel ein Telefonkabel, eine kurze Länge aufweist und an jedem seiner Enden mit je einem männlichen Verbinder (10, 10a) versehen ist, um die Vorrichtung mit einer üblichen Telefonanschlußbasis zu verbinden.

3. Vorrichtung nach Anspruch 1, **dadurch gekennzeichnet, daß** der bidirektionale Zugriffspfad (26) auf das Modem (22) dadurch erweitert wird, daß das flexible Teil (9), wie zum Beispiel ein Telefonteil kurzer Länge, angeschlossen wird.

4. Vorrichtung nach Anspruch 1, **dadurch gekennzeichnet, daß** der Mikroprozessor (21) und das Modem (22) als Satz (20) zweier integrierter Schaltungen gebildet sind, denen externe Speicher zugeordnet sind, wobei ein erster RAM-Speicher (23) als Zwischenspeicher arbeitet und Verwaltungsaufgaben und Datenverarbeitung unterstützt und ein zweiter ROM-Speicher (24) Verwaltungsprogramme, die im wesentlichen Beträge, welche über die Tastatur eingegeben werden, zu einem gegebenen Wert hinzufügen oder von diesem abziehen, und mehrere Kommunikationsprotokolle enthält, einschließlich einer Routine zum Aufbau einer angepaßten unmittelbaren Telefonverbindung vom Benutzer zu der entfernten Bankstelle (27), wobei die Routine aktiviert wird, indem eine (4d) der Tasten, denen Funktionen zugeordnet sind, betätigt wird.

5. Vorrichtung nach Anspruch 4, **dadurch gekennzeichnet, daß** eine andere bestimmte Taste derjenigen Tasten, denen Funktionen zugeordnet sind, dazu verwendet wird, um jedweden Vorgang, den die Vorrichtung ausführt, abzubrechen, und **dadurch gekennzeichnet, daß** die Vorrichtung dazu eingerichtet ist, bei jedwedem Schritt des Vorgangs oder der Verwaltung so zu handeln, daß diese beendet werden.

6. Vorrichtung nach Anspruch 5, **dadurch gekennzeichnet, daß** die Integration eines Moduls zum gesicherten Zugriff (*security access module)* vorgesehen ist, wie beispielsweise eines SAM-Moduls (25), über das alle eingerichteten Datenbewegungen laufen.

## Revendications

1. Dispositif pour des transactions financières à distance avec une carte d'un utilisateur, ce dispositif étant du genre qui comprend un microprocesseur (21), un modem (22), pour établir une liaison téléphonique avec une unité à distance (27) et des moyens d'interface pour des opérations de lecture de carte, ce dispositif comprenant un carter (2) pourvu sur une de ses faces d'un clavier numérique (3) et d'un écran (5) tel qu'un écran LCD et comprenant une rainure (6) pour introduire des cartes (7) et un chemin d'accès bidirectionnel (26) à ce modem (22), **caractérisé en ce que**
- la carte de cet utilisateur est une carte de microprocesseur;
- ce moyen d'interface sert également pour les opérations d'enregistrement de cartes;
- ce carter est de plus pourvu de touches (4, 4a, 4b, 4c, 4d) ayant des fonctions qui leur sont assignées;
- ce dispositif est portable dans la poche;
- ce dispositif est apte pour effectuer une transaction financière à distance dans laquelle une somme d'argent est chargée dans la carte de ce microprocesseur, cette somme d'argent étant enregistrée dans une mémoire de cette carte de microprocesseur; et
- ce dispositif comprend de plus:
- un membre flexible (9, 9a), tel qu'un câble téléphonique, pourvu d'au moins une fiche mâle (10) à son extrémité libre, apte pour établir une liaison de ce chemin d'accès (26) à la base de liaison téléphonique standard;
- une cavité (8, 14) ayant une taille lui permettant d'héberger ce membre flexible de liaison (9, 9a) pour le stocker et éventuellement le transporter lorsqu'il n'est pas utilisé;
- un couvercle amovible (11, 18) pour fermer provisoirement cette cavité (8, 14).

2. Dispositif conformément à la revendication 1, **caractérisé en ce que** ce chemin d'accès bidirectionnel (26) à ce modem (22) finit en une fiche femelle de sortie (13) et **en ce que** ce membre de connexion (9a) tel qu'un câble téléphonique comprend un tronçon court et il est pourvu d'une fiche mâle (10, 10a) à chacune de ses extrémités, apte pour brancher le dispositif à une base de liaison téléphonique standard.

3. Dispositif, conformément à la revendication 1, **caractérisé en ce que** ce chemin d'accès bidirectionnel (26) à ce modem (22) est prolongé par ce membre flexible de connexion (9), tel qu'un membre téléphonique comprenant un tronçon court.

4. Dispositif conformément à la revendication 1, **caractérisé en ce que** ce microprocesseur (21) et modem (22) sont constitués comme un ensemble (20) de deux circuits intégrés, qui ont des mémoires externes associées, une première RAM (23) qui agit en tant que mémoire intermédiaire qui est le support des tâches de gestion et de traitement de données et une deuxième ROM (24) qui héberge les programmes de gestion, essentiellement en faisant l'addition et la soustraction de sommes, introduites à travers le clavier à une valeur déterminée et plusieurs protocoles de communication, comprenant une routine pour établir une connexion téléphonique directe sur mesure depuis l'utilisateur jusqu'au bureau de banque à distance (27), cette routine étant activée en tapant sur une de ces touches (4d) ayant des fonctions qui leur sont assignées.

5. Dispositif conformément à la revendication 4, **caractérisé en ce qu'**une autre touche spécifique de celles qui ont des fonctions qui leur sont assignées, est appliquée à l'annulation de toute opération que le dispositif effectue et **en ce qu'**il est préparé pour agir à chaque phase du processus de gestion, en les arrêtant.

6. Dispositif conformément à la revendication 5, **caractérisé en ce que** l'intégration d'un module d'accès de sécurité a été fournie tel qu'un module SAM (25) à travers lequel circule les données concernées.
